# EUROPEAN PATENT SPECIFICATION

(11) **EP 3 992 025 B1**
(45) Date of publication and mention of the grant of the patent: **01.05.2024**
(21) Application number: 21202488.9
(22) Date of filing: 13.10.2021
(51) Int. Cl.: B60N 2/28

(54) **CHILD CAR SEAT**
AUTOKINDERSITZ
SIÈGE ENFANT POUR AUTOMOBILE

(30) Priority: 30.10.2020 IT 202000006079 U
(43) Date of publication of application: 04.05.2022
(73) Proprietor: Artsana S.p.A., 22070 Grandate (CO) (IT)
(72) Inventor: MARCHESINI, Luca, 22070 Grandate CO (IT); MERLI, Gianluca, 22070 Grandate CO (IT); GAZZA, Luca, 22070 Grandate CO (IT)
(74) Representative: Perani & Partners S.p.A.

(56) References cited:
- EP-A1- 2 261 077
- US-A1- 2019 210 493

## Description

### Technical Field

The present invention relates to a child car seat which can be particularly used, for example, for the transport of children.

### Background art

A child car seat is known in the state of the art. Such a child car seat comprises a backrest extending between a lower portion and an opposite upper portion along a longitudinal direction.

In addition, the child seat of the prior art comprises a sitting portion connected to the backrest at the lower portion thereof and a headrest connected to the backrest at the upper portion thereof.

Furthermore, said child seat comprises adjusting means configured to adjust the position of the headrest between a lower position and an opposite upper position along the longitudinal direction. The distance of the headrest from the lower portion of the backrest along the longitudinal direction increases from the lower position to the upper position. In detail, the document EP 2261077 A1 discloses said adjusting means sliding in a guide to vary the apparent length of the backrest and consequently the position of the headrest along the longitudinal direction.

It is also known that the manner in which it is preferable to fasten the child to the child seat varies based on the distance of the headrest from the lower portion of the backrest along the longitudinal direction.

In fact, for example, in the case of distance of the headrest from the lower portion of the backrest in the range between 76-105 cm it is preferable to use the seatbelt integrated in the child seat. Conversely, again for example, in the case of distance of the headrest from the lower portion of the backrest in the range between 100-150 cm it is preferable to fasten the child to the child seat with the use of the seatbelt of the car.

### Problems of the prior art

However, in the child seat of the state of the art it is not possible to easily identify the distance at which the headrest has been positioned with respect to the lower portion of the backrest. It follows that for the child seat of the prior art, is not it immediate to understand which seatbelt is preferable to use, to fasten the child to the child seat at different times, i.e., the seatbelt integrated in the child seat or those of the car.

Accordingly, in the case of the child seat of the prior art, there is a risk that the child is not correctly fastened to the child seat, also leading to the possible fall of the child from the child seat during transport in the car.

### Summary of the invention

In this context, the technical task underlying the present invention is to propose a child car seat which overcomes the drawbacks of the prior art.

In particular, it is an object of the present invention to propose a child car seat which allows to easily recognize with which seatbelt it is preferable to fasten the child to the child seat.

The invention is defined by the technical features set forth in independent claim 1, additional features are disclosed in the dependent claims.

### Advantages of the invention

Thanks to an embodiment of the invention, it is possible to easily identify the seatbelt with which it is preferable to fasten the child to the child seat.

Thanks to the preferred embodiment of the invention it is also possible to have a visual indication representative of the configuration in which the headrest is located and therefore of the seatbelt with which it is preferable to fasten the child to the child seat.

### BRIEF DESCRIPTION OF THE DRAWINGS

Further features and advantages of the present invention will become more apparent from the description of an exemplary, but not exclusive, and therefore nonlimiting preferred embodiment of a child car seat, as illustrated in the appended figures, in which:

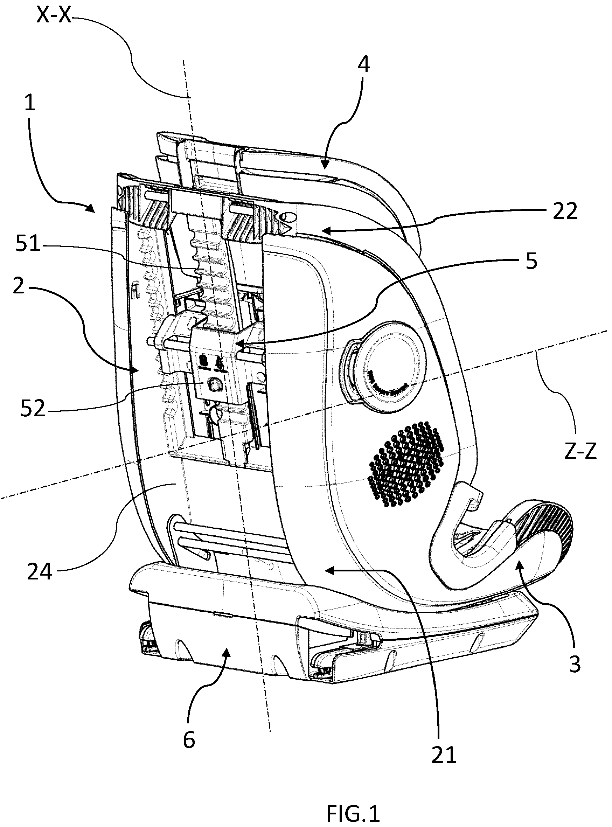

- Figure 1 is a rear perspective representation of the child seat in accordance with the present invention;

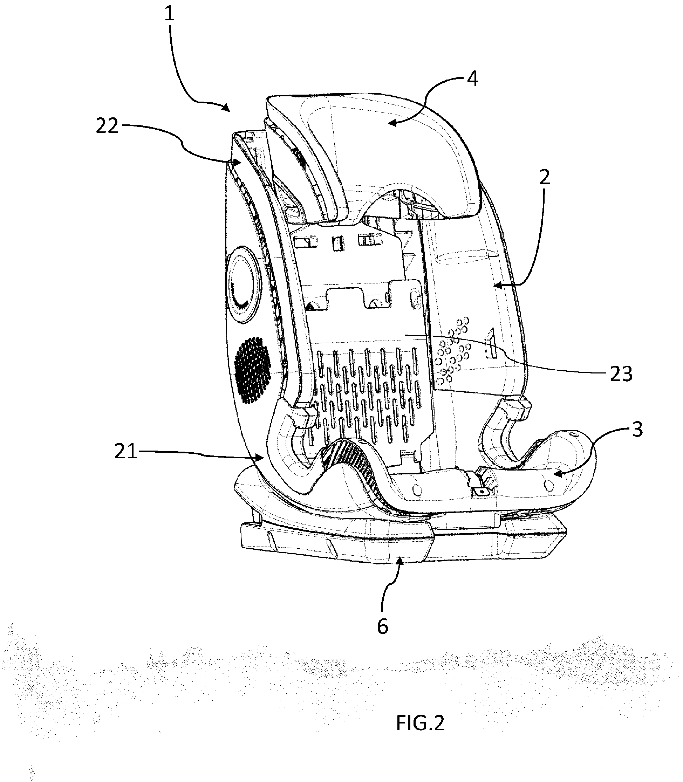

- Figure 2 is a front perspective representation of the child seat of figure 1;

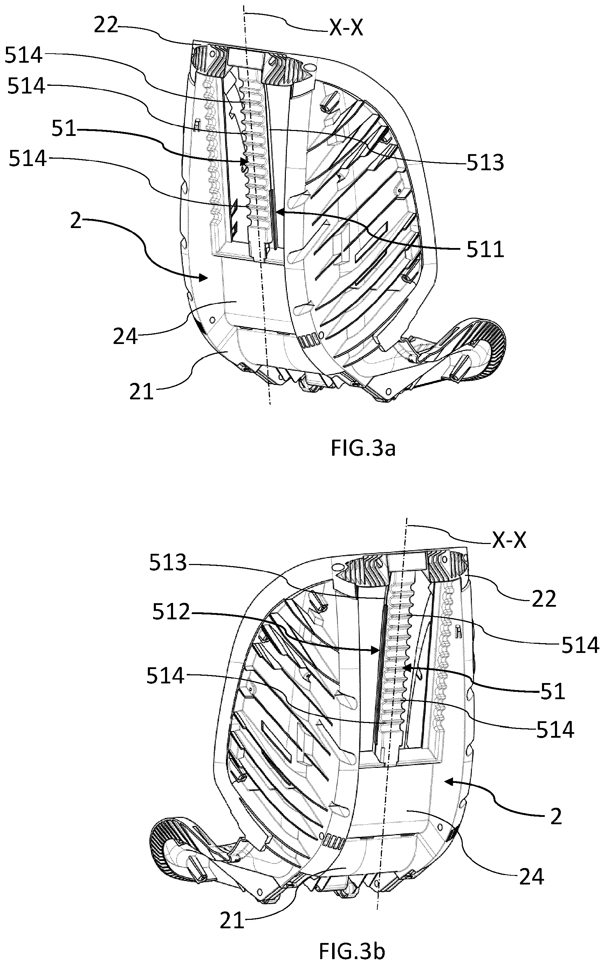

- Figure 3a is a first partially sectional perspective representation of the child seat of figure 1;
- Figure 3b is a second partially sectional perspective representation of the child seat of figure 1;

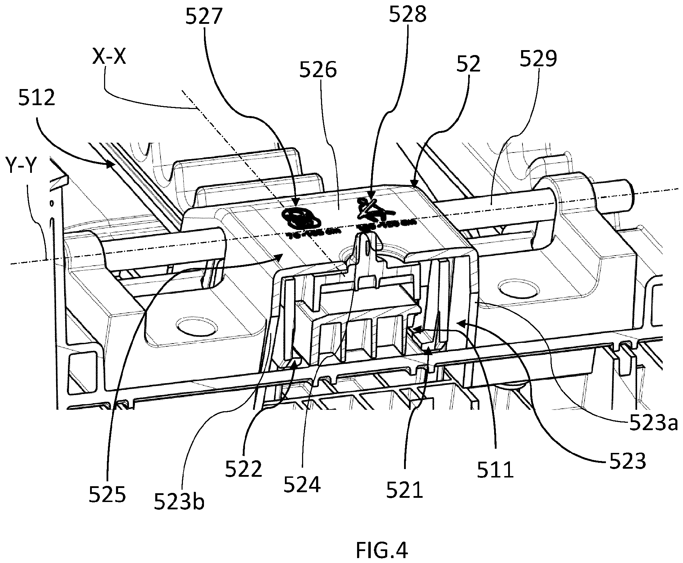

- Figure 4 is a perspective representation of a detail of the child seat of figure 1.

### DETAILED DESCRIPTION

With particular reference to the appended figures, the number 1 indicates a child seat 1 for a car (the car is not illustrated in the appended figures). Such a child seat 1 can be used for the transport of children and can be placed, for example, in the rear passenger compartment of a car.

The child seat 1 comprises a backrest 2 extending between a lower portion 21 and an opposite upper portion 22 along a longitudinal direction X-X. Preferably, the backrest 2 has a front surface 23 configured to contact the back of a child and an opposite rear surface 24 along an extension direction Z-Z transverse to the longitudinal direction X-X. The rear surface 24 is configured to contact the seats (not shown in the appended figures) of the car.

In addition, the child seat 1 comprises a sitting portion 3, connected to the backrest 2 at the lower portion 21 of the backrest 2.

The figures also show an optional base 6, which can be fixed to a seat of the car. The sitting portion 3 is adapted to be mounted on the base 6. Preferably, the sitting portion 3 is slidable with respect to the base 6 along the extension direction Z-Z, between a forward position and a rearward position.

Preferably, the child seat 1 also comprises an integrated seatbelt (not shown in the appended figures) for fastening the child to the child seat 1. The integrated seatbelt can be a three- or five-point seatbelt.

The child seat 1 further comprises a headrest 4 connected to the backrest 2 at the upper portion 22 of the backrest 2. Such a headrest 4 is configured to receive and support the head of the child housed in the child seat 1.

Preferably, the headrest 4 is positioned in front of the front surface 23 of the backrest 2.

The child seat 1 comprises adjusting means 5 configured to adjust the position of the headrest 4 between a lower position and an opposite upper position along the longitudinal direction X-X. The distance of the headrest 4 from the lower portion 21 of the backrest 2 along the longitudinal direction X-X increases from the lower position to the upper position. In other words, the distance of the headrest 4 from the lower portion 21 of the backrest 2 at the upper position is greater than the distance of the headrest 4 from the lower portion of the backrest 2 at the lower position.

As will be described in more detail, part of the adjusting means 5 is fastened to the backrest 2, while another part of the adjusting means is fastened to the headrest 4. Such parts change position to each other to move the headrest 4 with respect to the backrest 2.

Preferably, the adjusting means 5 are connected to the backrest 2 at the rear surface 24 of the backrest 2. Still preferably, the adjusting means 5 connect the headrest 4 to the backrest 2.

The adjusting means 5 comprise a first guide 51 fastened to the backrest 2 and arranged along the longitudinal direction X-X. In addition, the adjusting means 5 comprise a slider 52 movable along the first guide 51. The slider 52 is switchable between a first configuration and a second configuration. In the first configuration, the slider 52 is movable along the first guide 51 to move the headrest 4 between the lower position and an intermediate position, which is between the lower position and the upper position. In the second configuration, the slider 52 is movable along the first guide 51 to move the headrest 4 between the intermediate position and the upper position.

The distance of the headrest 4 from the lower portion 21 of the backrest 2 at the intermediate position is greater than the distance of the headrest 4 from the lower portion 21 of the backrest 2 at the lower position, and is less than the distance of the headrest 4 from the lower portion 21 of the backrest 2 at the upper position.

It should be noted that, when the slider 52 is in the first configuration, it is envisaged that the user secures the child to the child seat 1 by using the seatbelt integrated in the child seat 1. Conversely, when the slider 52 is in the second configuration it is envisaged that the user secures the child to the child seat 1 by using the seatbelt of the seat of the car. Advantageously, by checking whether the slider 52 is in the first or second configuration it is possible to easily identify the preferable mode for fastening the child to the child seat 1.

Furthermore, as long as a child is in the growth phase where it is preferable to use the seatbelts integrated in the child seat 1, the slider 52 can be maintained in the first configuration. As a result, there is no risk of excessively lifting the headrest 4. When the child passes this growth phase, the slider 52 is switched only once from the first to the second configuration, so that the height of the headrest 4 is in the best range for using the seatbelts of the vehicle.

The first guide 51 comprises a first 511 and a second guide element 512 and the slider 52 comprises a first 521 and a second sliding element 522.

In the first slider configuration 52 the first sliding element 521 is engaged with the first guide element 511 to slide along the first guide element 511, while in the second slider configuration 52 the second sliding element 522 is engaged with the second guide element 512 to slide along the second guide element 512.

The sliding of the first sliding element 521 along the first guide element 511 allows the headrest 4 to be moved between the lower position and the intermediate position, and vice versa the sliding of the second sliding element 522 along the second guide element 512 allows the headrest 4 to be moved between the intermediate position and the upper position.

In accordance with the preferred embodiment of the invention, the first 511 and the second guide elements 512 are parallel to each other and are arranged along the longitudinal direction X-X on opposite sides 513 of the first guide 51. In the illustrated embodiment the two guide elements 511, 512 are two grooves, while the two sliding elements 521, 522 are two teeth adapted to engage and slide in the grooves.

The grooves which identify the two guide elements 511, 512 face away from each other, while the teeth which identify the sliding elements 521, 522 face towards each other.

According to an aspect, the first guide element 511 is configured to prevent the movement of the headrest 4 between the intermediate position and the upper position when the slider 52 is in the first configuration. In other words, the first guide element 511 is limited between two ends which correspond to the lower position and element 511 is limited between two ends which correspond to the lower position and the intermediate position of the headrest 4, without extending further up to allow the headrest 4 to reach the upper position.

Similarly, in some embodiments the second guide element 512 is configured to prevent the movement of the headrest 4 between the lower position and the intermediate position when the slider 52 is in the second configuration. In such a case, the second guide element 512 extends between two ends corresponding to the upper position and the intermediate position of the headrest 4, without extending to allow the headrest 4 to reach the lower position.

However, in the illustrated embodiment the second guide element 512 extends uninterrupted between ends which correspond to the lower position and the upper position of the headrest 4, and thus does not limit the movement of the headrest 4 to only reaching the intermediate position.

According to an aspect, the slider 52 comprises a covering casing 525 defining a compartment 523. The first 521 and the second sliding element 522 are adapted to translate inside the compartment 523 along a sliding direction Y-Y, transverse to the longitudinal direction X-X, to switch the slider 52 between the first and the second configurations.

Preferably, the compartment 523 extends between a first wall 523a and an opposite second wall 523b along the sliding direction Y-Y. The first sliding element 521 abuts the first wall 523a when the slider 52 is in the second configuration, while the second sliding element 522 abuts the second wall 523b when the slider 52 is in the first configuration.

Still preferably, the slider 52 comprises an actuator 524 connected to the first 521 and the second sliding elements 522. The actuator 524 is adapted to be dragged by a user along the sliding direction Y-Y to translate the first 521 and the second sliding elements 522 along the sliding direction Y-Y. Translating the actuator 524 then allows the slider 52 to be switched between the first and second configurations.

The actuator 524 can be made for example as a lever adapted to be grasped by a user for dragging the first 521 and the second sliding elements 522 along the sliding direction Y-Y.

The distance between the sliding elements 521, 522 in the sliding direction Y-Y is different, preferably greater than the distance of the guide elements 511, 512 in the sliding direction Y-Y. Therefore, sliding the actuator 524 along sliding direction Y-Y causes one of the sliding elements 521, 522 to engage with the respective guide element 511, 512, and simultaneously causes the other of the sliding elements 521, 522 to disengage from the respective guide element 511, 512.

Still in accordance with the preferred embodiment of the invention, the covering casing 525 has on an outer surface 526 thereof a first graphic indication 527, representative of a first mode of transport of a child in the child seat 1, and a second graphic indication 528, representative of a second mode of transport of a child in the child seat 1.

For example, the first mode of transport corresponds to the use of the integrated seatbelt of the child seat 1 to fasten the child to the child seat 1, whereas the second mode of transport corresponds to the use of the seatbelt of the car to fasten the child to the child seat 1.

The actuator 524 is near the first graphical indication 527, when the slider 52 is in the first configuration, and is near the second graphical indication 528 when the slider 52 is in the second configuration. Preferably, the actuator 524 is accessible through a slot of the covering casing 525, which extends between two ends that are proximal, respectively, to the first 527 and the second graphic indications 528. Advantageously, by checking whether the slider 52 is near the first 527 or the second graphic indication 528, it is immediately possible to verify the preferable manner to fasten the child to the child seat 1.

Still in accordance with the preferred embodiment of the invention, the first guide 51 comprises ribs 514 and the slider 52 comprises a peg 529 adapted to engage with distinct ribs 514 to reversibly lock the headrest 4 in respective distinct positions along the longitudinal direction X-X. In other words, the engagement of the peg 529 with a respective rib 514 allows the headrest 4 to be locked in a respective position between the lower position and the upper position. More in detail, in each distinct locking position the peg 529 is retained between a respective distinct pair of ribs 514.

It should be noted that the ribs 514 are arranged aligned with each other along the longitudinal direction X-X. They thus form a series of ribs 514, which is preferably positioned between the first 511 and the second guide elements 512. Further series of parallel ribs 514 can be provided to engage the peg 529 simultaneously in multiple parts, for example at two end portions of the peg 529 and a central portion of the peg 529.

## Claims

1. A child car seat (1), comprising:
- a backrest (2) extending between a lower portion (21) and an opposite upper portion (22) along a longitudinal direction (X-X);
- a sitting portion (3) connected to the backrest (2) at the lower portion (21) of the backrest (2);
- a headrest (4) connected to the backrest (2) at the upper portion (22) of the backrest (2);
- adjusting means (5) configured to adjust the position of the headrest (4) between a lower position and an opposite upper position along the longitudinal direction (X-X), the distance of the headrest (4) from the lower portion (21) of the backrest (2) along the longitudinal direction (X-X) increasing from the lower position to the upper position; the adjusting means (5) comprising:
- a first guide (51) fixed to the backrest (2) and arranged along the longitudinal direction (X-X), and
- a slider (52) movable along the first guide (51) and switchable between a first configuration, in which the slider (52) is movable along the first guide (51) to move the headrest (4) between the lower position and an intermediate position, comprised between the lower position and the upper position, and a second configuration, in which the slider (52) is movable along the first guide to move the headrest (4) between the intermediate position and the upper position,
**characterized in that:**
- the first guide (51) comprises a first (511) and a second guide element (512) and the slider (52) comprises a first (521) and a second sliding element (522); and
- in the first slider configuration (52) the first sliding element (521) is engaged with the first guide element (511) to slide along said first guide element (511), while in the second slider configuration (52) the second sliding element (522) is engaged with the second guide element (512) to slide along said second guide element (512).

2. Child seat (1) according to claim 1, wherein the first (511) and the second guide element (512) are parallel to each other and are arranged along the longitudinal direction (X-X) on opposite sides (513) of the first guide (51).

3. Child seat (1) according to claim 1 or 2, wherein the first guide element (511) is configured to prevent the movement of the headrest (4) between the intermediate position and the upper position when the slider (52) is in the first configuration.

4. Child seat according to any one of claims 1 to 3, wherein the slider (52) comprises a covering casing (525) defining a compartment (523), the first (521) and the second sliding element (522) being adapted to translate inside the compartment (523) along a sliding direction (Y-Y) transverse to the longitudinal direction (X-X) to switch the slider (52) between the first and the second configuration.

5. Child seat according to claim 4, wherein the compartment (523) extends between a first wall (523a) and an opposite second wall (523b) along the sliding direction (Y-Y), the first sliding element (521) abutting the first wall (523a) when the slider (52) is in the second configuration, the second sliding element (522) abutting the second wall (523b) when the slider (52) is in the first configuration.

6. Child seat (1) according to claim 4 or 5, wherein the slider (52) comprises an actuator (524) connected to the first (521) and the second sliding element (522) and adapted to be dragged by a user along the sliding direction (Y-Y) to translate the first (521) and the second sliding element (522) along the sliding direction (Y-Y).

7. Child seat (1) according to claim 6, wherein the covering casing (525) has, on an outer surface (526) thereof, a first graphic indication (527) representative of a first mode of transport of a child in the child seat (1) and a second graphic indication (528) representative of a second mode of transport of a child in the child seat (1), the actuator (524) being near the first graphic indication (527), when the slider (52) is in the first configuration, and being near the second graphic indication (528) when the slider (52) is in the second configuration.

8. Child seat (1) according to any one of claims 1 to 7, wherein the first guide (51) comprises ribs (514), the slider (52) comprising a peg (529) adapted to engage with distinct ribs (514) to reversibly lock the headrest (4) in respective distinct positions along the longitudinal direction (X-X).

9. Child seat (1) according to any one of claims 1 to 8, wherein said backrest (2) has a front surface (23) configured to contact the back of a child and an opposite rear surface (24) along an extension direction (Z-Z) transverse to the longitudinal direction (X-X), said adjusting means (5) being connected to the backrest (2) at the rear surface (24) of said backrest (2).

## Patentansprüche

1. Kinderautositz (1), umfassend:
- eine Rückenlehne (2), die sich zwischen einem unteren Abschnitt (21) und einem gegenüberliegenden oberen Abschnitt (22) entlang einer Längsrichtung (X-X) erstreckt;
- einen Sitzabschnitt (3), der mit der Rückenlehne (2) am unteren Abschnitt (21) der Rückenlehne (2) verbunden ist;
- eine Kopfstütze (4), die mit der Rückenlehne (2) am oberen Abschnitt (22) der Rückenlehne (2) verbunden ist;
- Einstellmittel (5), die konfiguriert sind, um die Position der Kopfstütze (4) zwischen einer unteren Position und einer gegenüberliegenden oberen Position entlang der Längsrichtung (X-X) einzustellen, wobei der Abstand der Kopfstütze (4) vom unteren Abschnitt (21) der Rückenlehne (2) entlang der Längsrichtung (X-X) von der unteren Position zur oberen Position zunimmt; wobei die Einstellmittel (5) Folgendes umfassen:
- eine erste Führung (51), die an der Rückenlehne (2) befestigt und entlang der Längsrichtung (X-X) angeordnet ist, und
- einen Gleiter (52), der entlang der ersten Führung (51) bewegbar ist und zwischen einer ersten Konfiguration, in der der Gleiter (52) entlang der ersten Führung (51) bewegbar ist, um die Kopfstütze (4) zwischen der unteren Position und einer Zwischenposition, die zwischen der unteren Position und der oberen Position umfasst, zu bewegen, und einer zweiten Konfiguration umschaltbar ist, in der der Gleiter (52) entlang der ersten Führung bewegbar ist, um die Kopfstütze (4) zwischen der Zwischenposition und der oberen Position zu bewegen,
**dadurch gekennzeichnet, dass**:
- die erste Führung (51) ein erstes (511) und ein zweites Führungselement (512) umfasst und der Gleiter (52) ein erstes (521) und ein zweites Gleitelement (522) umfasst; und
- in der ersten Gleiterkonfiguration (52) das erste Gleitelement (521) mit dem ersten Führungselement (511) in Eingriff steht, um entlang des ersten Führungselements (511) zu gleiten, während in der zweiten Gleiterkonfiguration (52) das zweite Gleitelement (522) mit dem zweiten Führungselement (512) in Eingriff steht, um entlang des zweiten Führungselements (512) zu gleiten.

2. Kindersitz (1) nach Anspruch 1, wobei das erste (511) und das zweite Führungselement (512) parallel zueinander sind und entlang der Längsrichtung (X-X) auf gegenüberliegenden Seiten (513) der ersten Führung (51) angeordnet sind.

3. Kindersitz (1) nach Anspruch 1 oder 2, wobei das erste Führungselement (511) konfiguriert ist, um die Bewegung der Kopfstütze (4) zwischen der Zwischenposition und der oberen Position zu verhindern, wenn sich der Gleiter (52) in der ersten Konfiguration befindet.

4. Kindersitz nach einem der Ansprüche 1 bis 3, wobei der Gleiter (52) ein Abdeckgehäuse (525) umfasst, das ein Fach (523) definiert, wobei das erste (521) und das zweite Gleitelement (522) angepasst sind, um sich innerhalb des Fachs (523) entlang einer Gleiterichtung (Y-Y) quer zur Längsrichtung (X-X) zu verschieben, um den Gleiter (52) zwischen der ersten und der zweiten Konfiguration zu wechseln.

5. Kindersitz nach Anspruch 4, wobei sich das Fach (523) zwischen einer ersten Wand (523a) und einer gegenüberliegenden zweiten Wand (523b) entlang der Gleiterichtung (Y-Y) erstreckt, wobei das erste Gleitelement (521) an der ersten Wand (523a) anliegt, wenn sich der Gleiter (52) in der zweiten Konfiguration befindet, wobei das zweite Gleitelement (522) an der zweiten Wand (523b) anliegt, wenn sich der Gleiter (52) in der ersten Konfiguration befindet.

6. Kindersitz (1) nach Anspruch 4 oder 5, wobei der Gleiter (52) ein Betätigungselement (524) umfasst, der mit dem ersten (521) und dem zweiten Gleitelement (522) verbunden ist und dazu ausgelegt ist, von einem Benutzer entlang der Gleiterichtung (Y-Y) gezogen zu werden, um das erste (521) und das zweite Gleitelement (522) entlang der Gleiterichtung (Y-Y) zu verschieben.

7. Kindersitz (1) nach Anspruch 6, wobei das Abdeckgehäuse (525) auf einer Außenfläche (526) davon eine erste grafische Anzeige (527), die für einen ersten Transportmodus eines Kindes in dem Kindersitz (1) repräsentativ ist, und eine zweite grafische Anzeige (528), die für einen zweiten Transportmodus eines Kindes in dem Kindersitz (1) repräsentativ ist, aufweist, wobei das Betätigungselement (524) in der Nähe der ersten grafischen Anzeige (527) ist, wenn sich der Gleiter (52) in der ersten Konfiguration befindet, und in der Nähe der zweiten grafischen Anzeige (528) ist, wenn sich der Gleiter (52) in der zweiten Konfiguration befindet.

8. Kindersitz (1) nach einem der Ansprüche 1 bis 7, wobei die erste Führung (51) Rippen (514) umfasst, wobei der Gleiter (52) einen Stift (529) umfasst, der dazu ausgelegt ist, mit unterschiedlichen Rippen (514) in Eingriff zu treten, um die Kopfstütze (4) in jeweiligen unterschiedlichen Positionen entlang der Längsrichtung (X-X) reversibel zu verriegeln.

9. Kindersitz (1) nach einem der Ansprüche 1 bis 8, wobei die Rückenlehne (2) eine Vorderfläche (23), die konfiguriert ist, um den Rücken eines Kindes zu berühren, und eine gegenüberliegende Rückfläche (24) entlang einer Erstreckungsrichtung (Z-Z) quer zur Längsrichtung (X-X) aufweist, wobei das Einstellmittel (5) mit der Rückenlehne (2) an der Rückfläche (24) der Rückenlehne (2) verbunden ist.

## Revendications

1. Siège auto pour enfant (1), comprenant :
- un dossier (2) s'étendant entre une partie inférieure (21) et une partie supérieure opposée (22) le long d'une direction longitudinale (X-X) ;
- une partie assise (3) reliée au dossier (2) au niveau de la partie inférieure (21) du dossier (2) ;
- un appui-tête (4) relié au dossier (2) au niveau de la partie supérieure (22) du dossier (2) ;
- des moyens de réglage (5) configurés pour régler la position de l'appui-tête (4) entre une position inférieure et une position supérieure opposée le long de la direction longitudinale (X-X), la distance de l'appui-tête (4) à partir de la partie inférieure (21) du dossier (2) le long de la direction longitudinale (X-X) augmentant de la position inférieure à la position supérieure ; les moyens de réglage (5) comprenant :
- un premier guide (51) fixé au dossier (2) et disposé selon la direction longitudinale (X-X), et
- un curseur (52) mobile le long du premier guide (51) et commutable entre une première configuration, dans laquelle le curseur (52) est mobile le long du premier guide (51) pour déplacer l'appui-tête (4) entre la position inférieure et une position intermédiaire, comprise entre la position inférieure et la position supérieure, et une deuxième configuration, dans laquelle le curseur (52) est mobile le long du premier guide pour déplacer l'appui-tête (4) entre la position intermédiaire et la position supérieure,
**caractérisé en ce que :**
- le premier guide (51) comprend un premier (511) et un deuxième élément de guidage (512) et le curseur (52) comprend un premier (521) et un deuxième élément coulissant (522) ; et
- dans la première configuration de curseur (52), le premier élément coulissant (521) est en prise avec le premier élément de guidage (511) pour glisser le long dudit premier élément de guidage (511), tandis que dans la deuxième configuration de curseur (52), le deuxième élément coulissant (522) est en prise avec le deuxième élément de guidage (512) pour glisser le long dudit deuxième élément de guidage (512).

2. Siège enfant (1) selon la revendication 1, dans lequel le premier (511) et le deuxième élément de guidage (512) sont parallèles l'un à l'autre et sont disposés le long de la direction longitudinale (X-X) sur des côtés opposés (513) du premier guide (51).

3. Siège enfant (1) selon la revendication 1 ou 2, dans lequel le premier élément de guidage (511) est configuré pour empêcher le mouvement de l'appui-tête (4) entre la position intermédiaire et la position supérieure lorsque le curseur (52) est dans la première configuration.

4. Siège enfant selon l'une quelconque des revendications 1 à 3, dans lequel le curseur (52) comprend un boîtier de recouvrement (525) définissant un compartiment (523), le premier (521) et le deuxième élément coulissant (522) étant adaptés à translater à l'intérieur du compartiment (523) le long d'une direction de coulissement (Y-Y) transversale à la direction longitudinale (X-X) pour commuter le curseur (52) entre la première et la deuxième configuration.

5. Siège enfant selon la revendication 4, dans lequel le compartiment (523) s'étend entre une première paroi (523a) et une deuxième paroi opposée (523b) le long de la direction de coulissement (Y-Y), le premier élément coulissant (521) venant en butée contre la première paroi (523a). ) lorsque le curseur (52) est dans la deuxième configuration, le deuxième élément coulissant (522) venant en butée contre la deuxième paroi (523b) lorsque le curseur (52) est dans la première configuration.

6. Siège enfant (1) selon la revendication 4 ou 5, dans lequel le curseur (52) comprend un actionneur (524) relié au premier (521) et au deuxième élément coulissant (522) et adapté pour être traîné par un utilisateur le long de la direction de coulissement (Y-Y) pour translater le premier (521) et le deuxième élément coulissant (522) le long de la direction de coulissement (Y-Y).

7. Siège enfant (1) selon la revendication 6, dans lequel le boîtier de recouvrement (525) présente, sur une surface extérieure (526) de celui-ci, une première indication graphique (527) représentative d'un premier mode de transport d'un enfant dans le siège enfant (1) et une deuxième indication graphique (528) représentative d'un deuxième mode de transport d'un enfant dans le siège enfant (1), l'actionneur (524) étant proche de la première indication graphique (527), lorsque le curseur (52) est dans la première configuration, et étant proche de la deuxième indication graphique (528) lorsque le curseur (52) est dans la deuxième configuration.

8. Siège enfant (1) selon l'une quelconque des revendications 1 à 7, dans lequel le premier guide (51) comprend des nervures (514), le curseur (52) comprenant un pion (529) adapté pour s'engager avec des nervures distinctes (514) pour verrouiller de façon réversible l'appui-tête (4) dans des positions distinctes respectives le long de la direction longitudinale (X-X).

9. Siège enfant (1) selon l'une quelconque des revendications 1 à 8, dans lequel ledit dossier (2) a une surface avant (23) configurée pour entrer en contact avec le dos d'un enfant et une surface arrière opposée (24) le long d'une direction d'extension (Z-Z) transversale à la direction longitudinale (X-X), lesdits moyens de réglage (5) étant reliés au dossier (2) au niveau de la surface arrière (24) dudit dossier (2).
